# EUROPÄISCHE PATENTSCHRIFT

(11) **EP 3 336 663 B1**
(45) Veröffentlichungstag und Bekanntmachung des Hinweises auf die Patenterteilung: **19.05.2021**
(21) Anmeldenummer: 17202956.3
(22) Anmeldetag: 22.11.2017
(51) Int. Cl.: G06F 3/023, G06F 3/0488, G06F 3/0482, B60K 35/00, B60K 37/06

(54) **BEDIENSYSTEM, VERFAHREN ZUM BEDIENEN EINES BEDIENSYSTEMS UND EIN FAHRZEUG MIT EINEM BEDIENSYSTEM**
OPERATING SYSTEM, METHOD FOR OPERATING AN OPERATING SYSTEM AND A MOTOR VEHICLE PROVIDED WITH OPERATING SYSTEM
SYSTÈME D'EXPLOITATION, PROCÉDÉ DE FONCTIONNEMENT D'UN SYSTÈME D'EXPLOITATION ET UN VÉHICULE DOTÉ D'UN SYSTÈME D'EXPLOITATION

(30) Priorität: 15.12.2016 DE 102016014933
(43) Veröffentlichungstag der Anmeldung: 20.06.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85055 Ingolstadt (DE); Güllich, Johannes, 85229 Markt Indersdorf (DE); Ochs, Thomas, 82178 Puchheim (DE)
(74) Vertreter: v. Bezold & Partner Patentanwälte - PartG mbB

(56) Entgegenhaltungen:
- EP-A1- 1 281 158
- DE-A1- 10 025 126
- DE-A1- 19 941 949
- DE-A1-102013 004 245
- US-A- 6 011 542
- US-A1- 2007 209 016

## Beschreibung

### Beschreibung

Die Erfindung betrifft ein Bediensystem, ein Verfahren zum Bedienen eines Bediensystems und ein Fahrzeug mit einem Bediensystem.

Solche Bediensysteme bilden in Fahrzeugen eine Benutzerschnittstelle bzw. eine Mensch-Maschinen-Schnittstelle, über die ein Nutzer Einfluss auf fahrzeugintegrierte Funktionen nehmen oder Informationen abrufen kann. Wesentliche Bestandteile des Bediensystems sind ein Eingabeelement, eine Anzeigevorrichtung und eine Steuervorrichtung, wobei das Eingabeelement und die Anzeigevorrichtung an die Steuervorrichtung gekoppelt sind und die Steuervorrichtung derart ausgestaltet ist, dass sie - insbesondere abhängig von einer Eingabe des Nutzers mittels des Eingabeelements - eine Anzeige auf der Anzeigevorrichtung steuert bzw. kontrolliert.

Insbesondere betrifft die vorliegende Erfindung das Eintragen von Zeichenketten in einem von der Anzeigevorrichtung dargestellten Eingabefeld. In ein solches Eingabefeld soll z. B. ein Städtename eingefügt werden und die Steuervorrichtung stellt dann die eingetragene Zeichenkette einem Navigationssystem zur Verfügung, woraufhin wiederum eine Route für das Fahrzeug vom Navigationssystem vorgeschlagen wird. Ein solches Bediensystem ist beispielsweise aus der Druckschrift DE 10 2005 025 887 A1 bekannt. Das hier vorgestellte Bediensystem ist derart ausgestaltet, dass die Steuervorrichtung auf der Anzeigevorrichtung als Auswahlfeld eine kreisförmige Anordnung von möglichen alphanumerischen Zeichen und ein Markierungselement zur Anzeige bringt. Über einen Drehschalter lässt sich das Markierungselement auf einer Kreisbahn derart ausrichten, bis es auf das auszuwählende alphanumerische Zeichen zeigt.

Bei einem solchen Bediensystem ist der Nutzer gezwungen, beim Eintragen der Zeichenkette die Blickrichtung zwischen der aktuellen Position des Markierungselements auf der Kreisbahn und dem Eingabefeld, in das die ausgewählten alphanumerischen Zeichen bei deren Auswahl eingetragen werden, zu wechseln. Die Suche nach der aktuellen Ausrichtung des Markierungselements kostet den Nutzer beim Eintragen der alphanumerischen Zeichen nicht nur Zeit, sondern sie ist auch vergleichsweise anstrengend, da der Nutzer sich andauernd neu orientieren und seinen Blick ständig wechseln muss. Zudem besteht die Gefahr, dass der Fahrer abgelenkt wird, wodurch sein Unfallrisiko steigt.

DE 10 2013 004 245 A1 offenbart eine Vorrichtung zur Buchstabiereinrichtung, wobei das Auswahlfeld waagerecht und angrenzend zum Eingabefeld angeordnet ist.

DE 199 41 949 A1 offenbart ein Verfahren und eine Vorrichtung zur Auswahl alphanummerischer Datensätze, wobei ein Speller senkrecht und überlappend zum Eingabefeld angeordnet ist.

EP 1 281 158 A1 offenbart eine Bedieneinheit für die Bedienung einer elektrischen Vorrichtung, wobei die Eingabe buchstabenweise in einem waagerecht dargestellten ersten Bereich durch Auswahl in einem überlappend und senkrecht angeordneten zweiten Bereich erfolgt.

US 2007 209 016 A1 offenbart eine Methode zur tastaturlosen Eingabe von Buchstaben auf einem Bildschirmgerät mittels eines zyklisch veränderbaren Buchstaben-Auswahlfelds, wobei der ausgewählte Buchstabe nach der nutzerbetätigten Eingabe als Eingabebuchstabe ausgewählt wird.

Es ist somit eine Aufgabe der vorliegenden Erfindung ein Bediensystem bereitzustellen, das im Vergleich zum Stand der Technik für den Nutzer einfacher zu handhaben ist und das den Nutzer insbesondere auf Dauer weniger anstrengt.

Diese Aufgabe wird durch ein Bediensystem insbesondere durch ein Bediensystem eines Kraftfahrzeugs, ein Verfahren zum Benutzen des Bediensystems und ein Fahrzeug mit den Merkmalen der unabhängigen Ansprüche gelöst. Vorteilhafte Ausführungsformen und Anwendungen der Erfindung ergeben sich aus den anhängigen Ansprüchen und werden in der folgenden Beschreibung unter teilweiser Bezugnahme auf die Figuren näher erläutert.

Gemäß einem ersten Gesichtspunkt der vorliegenden Erfindung wird ein Bediensystem zur Eingabe einer Zeichenkette in einem Fahrzeug bereitgestellt. Wesentliche Bestandteile des Bediensystems sind ein Eingabeelement, eine Steuervorrichtung und eine Anzeigevorrichtung. Um eine Anzeige auf der Anzeigevorrichtung zu steuern ist hierbei die Steuervorrichtung vorgesehen, die beispielsweise als ein Prozessor mit einem abgespeicherten Softwareprogramm ausgestaltet ist. Hierbei ist die Steuervorrichtung mit der Anzeigevorrichtung und dem Eingabeelement gekoppelt und derart ausgestaltet, dass eine Anzeige auf der Anzeigevorrichtung durch die Steuervorrichtung steuerbar ist, wodurch z. B. eine bestimmte Darstellung auf der Anzeigevorrichtung zur Anzeige gebracht werden kann oder über eine Eingabe mit dem Eingabeelement mittels der Steuervorrichtung Änderungen an der Anzeige vorgenommen werden können. Dabei ist die Steuervorrichtung derart konfiguriert ist, dass sie neben einem Eingabefeld mit einem Zielbereich, der zur Eingabe eines alphanumerischen Zeichens vorgesehen ist, ein Auswahlfeld auf der Anzeigevorrichtung zur Anzeige bringt bzw. bereitstellt. Dieses Auswahlfeld stellt eine Auswahl von potentiellen alphanumerischen Zeichen zur Verfügung, von denen eines in einem Vorschaubereich des Auswahlfelds angeordnet ist. Dabei ist es vorgesehen, dass das Bediensystem derart ausgestaltet ist, dass mit einer Betätigung des Eingabeelements zwischen den jeweiligen alphanumerischen Zeichen, die im Vorschaubereich angeordnet sind, gewechselt und/oder das im Vorschaubereich angeordnete alphanumerische Zeichen ausgewählt werden kann, wodurch bei der Auswahl gezielt das gewünschte alphanumerische Zeichen in das Eingabefeld eingetragen wird. Durch ein sukzessives Wiederhohlen der Auswahl eines einzelnen alphanumerischen Zeichens lässt sich so in vorteilhafter Weise schließlich die gewünschte Zeichenkette bilden. Erfindungsgemäß ist es vorgesehen, dass der Vorschaubereich und der Zielbereich überlappend angeordnet sind. Dadurch sind der Vorschaubereich und der Zielbereich derart ausgerichtet, dass der Nutzer auf einen Blick sowohl den Vorschaubereich als auch den Zielbereich zeitgleich bzw. simultan erfassen kann und ein ständiger Blickwechsel nach und vor der Eingabe eines alphanumerischen Zeichen nicht länger erforderlich ist.

Vorzugsweise ist die Anzeigevorrichtung in ein Armaturenbrett bzw. eine Instrumententafel im Fahrzeug eingelassen. Beispielsweise ist die Anzeigevorrichtung ein Bildschirm eines in das Armaturenbrett eingelassenen Infotainmentsystems und eine Eingabe durch den Nutzer erfolgt über eine manuelle Betätigung des Eingabeelements. Neben der Eingabe von Städtenamen für ein fahrzeugintegriertes Navigationssystem ist es auch vorstellbar, dass mittels des Bediensystems als Zeichenkette Textnachrichten oder eine Telefonnummer zusammengestellt werden. Grundsätzlich sind unter alphanumerischen Zeichen Buchstaben, Zahlen und vorzugsweise Sonderzeichen zu verstehen. Vorzugsweise umfasst das Auswahlfeld weitere Zeichen, die beispielsweise zum Löschen eines zuvor eingegebenen alphanumerischen Zeichens, zur Bildung eines Leerzeichens und/oder zur Beendigung der Eingabe vorgesehen sind. Als angrenzend ist insbesondere eine solche Anordnung zu verstehen, bei der der Vorschaubereich weniger als 3 cm, bevorzugt weniger als 2 cm und besonders weniger als 1 cm vom Zielbereich entfernt angeordnet ist. Vorzugsweise kontaktieren sich der Zielbereich und der Vorschaubereich, beispielsweise an deren Rändern. Ferner ist es vorzugsweise vorgesehen, dass der Zielbereich und der Vorschaubereich während der sukzessiven Bildung der Zeichenkette in einer festen örtlichen Beziehung zueinander angeordnet sind, d. h. die relative Position des Vorschaubereichs zum Zielbereich während des Zusammensetzens der Zeichenkette bleibt gleich. Weiterhin ist es vorzugsweise vorgesehen, dass die alphanumerischen Zeichen außerhalb des Vorschaubereichs im Wesentlichen äquidistant zueinander angeordnet sind. Außerdem ist es vorzugsweise vorgesehen, dass sich der Vorschaubereich in das Auswahlfeld zwischen den alphanumerischen Zeichen so einfügt, dass die jeweils zum Vorschaubereich benachbarten alphanumerischen Zeichen im Auswahlfeld denjenigen entsprechen, die bei einer entsprechenden Betätigung des Eingabeelements in den Vorschaubereich als nächstes geladen werden bzw. im Vorschaubereich angeordnet werden.

Gemäß einer weiteren Ausführungsform der vorliegenden Erfindung ist es vorgesehen, dass im Auswahlfeld mehrere alphanumerische Zeichen entlang eines Halbkreises, eines offenen Kreises oder eines geschlossenen Kreises, angeordnet sind. Dadurch lässt sich das Auswahlfeld derart relativ zum Eingabefeld anordnen, dass das Eingabefeld im Wesentlichen tangential zu dem durch die mehreren alphanumerischen Zeichen vorgegebenen Bogen verläuft. Vorzugsweise ist der Vorschaubereich hierbei im Scheitelpunkt bzw. benachbart zum Scheitelpunkt eines gedachten Bogens angeordnet. Vorzugsweise wird nur ein Halbkreis als Auswahlfeld dargestellt. Dadurch kann in vorteilhafter Weise nicht nur eine Gesamtheit aus Eingabefeld und einem Auswahlfeld möglichst kompakt gehalten werden, das Auswahlfeld wird zudem vorteilhaft möglichst klein gehalten, um beim Nutzer den Instinkt zu unterdrücken, im Auswahlfeld erst das gewünschte Zeichen zu suchen. Stattdessen wird er dahingehend geschult, seinen Blick auf den vorgegebenen Vorschaubereich zu begrenzen. Insbesondere ist das Auswahlfeld als Spellrad bzw. Spellwheel ausgestaltet, bei dem beim Wechsel des alphanumerischen Zeichens im Vorschaubereich die alphanumerischen Zeichen im oder entgegen dem Uhrzeigersinn entlang des Bogens bzw. entlang des Halbkreises bewegt werden, bis das gewünschte alphanumerische Zeichen im Vorschaubereich angeordnet ist.

Vorzugsweise ist der Vorschaubereich in Bezug auf das Auswahlfeld ortsfest angeordnet. Dadurch ist dem Nutzer eine Orientierungshilfe gegeben, da er beim Blick auf das Auswahlfeld weiß, an welcher Stelle er den Vorschaubereich finden kann und sich nicht jedes Mal neu im Auswahlfeld orientieren muss. Insbesondere befindet sich der Auswahlbereich an einer Kante bzw. an einem oberen Ende des Auswahlfeldes.

Gemäß einer weiteren Ausführungsform der vorliegenden Erfindung ist vorgesehen, dass das alphanumerische Zeichen im Vorschaubereich deckungsgleich zu seiner Zielausrichtung im Eingabefeld angeordnet ist. Dadurch erkennt der Fachmann in vorteilhafter Weise, wie der Buchstabe sich in einen Gesamtkontext von bereits vorhandenen alphanumerischen Zeichen in das Eingabefeld einfügen wird, wenn das aktuelle alphanumerische Zeichen im Vorschaubereich mittels des Eingabeelements bestätigt wird. Um das alphanumerische Zeichen von den bereits in das Eingabefeld eingetragenen alphanumerischen Zeichen zu unterscheiden ist es vorzugsweise vorgesehen, dass sich das alphanumerische Zeichen in seiner visuellen Darstellung von den alphanumerischen Zeichen im Eingabefeld unterscheidet. Beispielsweise ist es in einer anderen Farbe dargestellt.

Weiterhin ist es bevorzugt vorgesehen, dass das Bediensystem derart ausgestaltet ist, dass sich nach dem Einfügen eines alphanumerischen Zeichens das Eingabefeld und/oder das Auswahlfeld zur erneuten gegenseitigen Ausrichtung von Zielbereich und Vorschaubereich parallel zu einer durch das Eingabefeld vorgegebenen Eingaberichtung verschiebt, wobei sich insbesondere das Eingabefeld oder das Auswahlfeld abhängig vom aktuellen Zielbereich parallel zur Eingaberichtung verschiebt. Mit anderen Worten richtet die Steuervorrichtung gemäß dieser Ausführungsform das Eingabefeld und/oder das Auswahlfeld nach jeder Eingabe neu aus, wodurch in vorteilhafter Weise die feste Relativausrichtung zwischen Zielbereich und Vorschaubereich während der Eingabe der Zeichenkette aufrechterhalten werden kann. Bevorzugt ist es vorgesehen, dass das Ausgabefeld solange verschoben wird, bis es mit einer Seite an den Rand der Anzeigefläche der Anzeigevorrichtung gerät und anschließend das Eingabefeld verschoben wird. Insbesondere ist es vorgesehen, dass die Eingaberichtung im Wesentlichen horizontal verläuft und beispielswiese durch eine Form des Eingabefelds auf der Anzeigevorrichtung vorgegeben wird.

Erfindungsgemäß ist es vorgesehen, dass im Auswahlfeld die alphanumerischen Zeichen außerhalb des Vorschaubereichs entlang eines generellen Verlaufs, nämlich eines Bogens, und insbesondere alphabetisch sortiert angeordnet sind und das alphanumerische Zeichen im Vorschaubereich gegenüber dem generellen Verlauf in Richtung des Zielbereichs versetzt angeordnet ist. Unter dem generellen Verlauf ist derjenige Verlauf zu verstehen, der sich beim gedanklichen Verbinden von benachbarten alphanumerischen Zeichen durch die außerhalb des Vorschaubereichs angeordneten alphanumerischen Zeichen global ergibt. Im Fall eines Spellrads als Auswahlfeld ist der generelle Verlauf beispielsweise bogenförmig, halbkreisförmig oder kreisförmig. Durch das versetzte Anordnen zum Eingabefeld hin wird zum einen der Vorschaubereich optisch hervorgerufen, und zum anderen lässt sich dadurch vermeiden, dass die zum Vorschaubereich benachbarten alphanumerischen Zeichen die Sicht auf das Eingabefeld verdecken. Sofern es sich um eine bogen- oder kreisförmige Anordnung der alphanumerischen Zeichen handelt, ist der Vorschaubereich radial nach außen versetzt angeordnet.

Gemäß einer weiteren Ausführungsform der vorliegenden Erfindung ist vorgesehen, dass sich das alphanumerische Zeichen im Vorschaubereich von den alphanumerischen Zeichen im Auswahlfeld außerhalb des Vorschaubereichs in seiner visuellen Darstellung unterscheidet. Dadurch wird der Blick des Nutzers in vorteilhafter Weise direkt auf den Vorschaubereich bzw. Zielbereich gelenkt. Beispielsweise ist das alphanumerische Zeichen im Vorschaubereich im Vergleich zu den alphanumerischen Zeichen außerhalb des Vorschaubereichs vergrößert, es weist eine andere Farbe auf und/oder es ist mit einer anderen Hintergrundfarbe oder einem anderen Hintergrundmuster hinterlegt. Es ist auch vorstellbar, dass die alphanumerischen Zeichen außerhalb des Vorschaubereichs mit kleiner werdendem Abstand zum Vorschaubereich größer werden, bis schließlich das alphanumerische Zeichen im Vorschaubereich am größten ist.

In einer weiteren Ausführungsform der vorliegenden Erfindung ist vorgesehen, dass der Zielbereich und der Vorschaubereich über ein gemeinsames graphisches Element, beispielsweise ein Rahmenelement, miteinander verbunden sind. Das graphische Element dient als Blickfang, mit dem der Nutzer möglichst schnell den Vorschaubereich und den Zielbereich auf der Anzeigefläche lokalisiert. Das Rahmenelement umrandet dabei vorzugsweise den Bereich von Zielbereich und Vorschaubereich und verbindet somit visuell das Eingabefeld und das Auswahlfeld.

Vorzugsweise ist das Bediensystem derart konfiguriert ist, dass eine vom Auswahlfeld bereitgestellte Auswahl an alphanumerischen Zeichen abhängt von den bereits in das Eingabefeld eingetragenen alphanumerischen Zeichen. Hierzu vergleicht die Steuervorrichtung beispielsweise die bereits ins Eingabefeld eingetragenen alphanumerischen Zeichen mit in einer Liste gespeicherten potentiellen Zeichenketten und reduziert die Auswahl an alphanumerischen Zeichen um diejenigen, die ohnehin nicht mehr als nächstes eingetragen werden könnten, um eine der abgespeicherten Zeichenketten zu realisieren. Dadurch wird die Auswahlmöglichkeit reduziert und der Nutzer kann schneller das gewünschte alphanumerische Zeichen im Vorschaubereich anwählen und schließlich zur Aufnahme in das Eingabefels bestätigen.

In einer weiteren Ausführungsform der vorliegenden Erfindung ist vorgesehen, dass die Anzeigevorrichtung ein Vorschlagsfeld aufweist, in dem abhängig von den bereits in das Eingabefeld eingetragenen alphanumerischen Zeichen Vorschläge für die Zeichenkette eingetragen sind. Mittels der im Vorschlagsfeld gelisteten Vorschläge lässt sich das sukzessive Zusammensetzen der alphanumerische Zeichen vorzeitig abbrechen und die gewünschte Zeichenkette unmittelbar anwählen. Beispielsweise werden im Vorschaufeld diejenigen möglichen Zeichenketten gelistet, die nach einem Vergleich der bereits eingetragenen alphanumerischen Zeichen mit in einer Liste gespeicherten Zeichenketten überhaupt noch möglich sind. Es ist dabei vorstellbar, dass die im Vorschlagsfeld gelisteten Zeichenketten abhängig von einer Häufigkeit, mit der sie in der Vergangenheit angewählt wurden, gelistet sind. Eine solche Personalisierung des Vorschlagsfelds vereinfacht das Eintragen der Zeichenkette für solche Zeichenketten, die häufiger als einmal verwendet werden.

Gemäß einer weiteren Ausführungsform der vorliegenden Erfindung ist vorgesehen, dass das Eingabeelement einen Dreh-Drücksteller, einen Touchscreen und/oder ein Spracherkennungssystem umfasst. Die Dreh-Drückstelle erweist sich insbesondere zusammen mit einem als Spellerrad ausgestalteten Auswahlfeld intuitiv, da sich die Drehbewegung des Dreh-Drückstellers mit einer Bewegung der alphanumerischen Zeichen im Auswahlfeld entlang eines Bogens bzw. entlang eines kreisförmigen Verlaufs synchronisieren lässt und eine Drückbewegung einer Bestätigung des im Vorschaufeld vorgewählten alphanumerischen Zeichens zugeordnet werden kann. Im Falle des Spracherkennungssystems lässt sich beispielsweise ein Wechsel zwischen den im Vorschaubereich geladenen alphanumerischen Zeichen durch entsprechende akustische Befehle initiieren oder unterbrechen bzw. stoppen. Sofern es sich um einen Touchscreen handelt, ist es vorstellbar, dass beispielsweise durch eine Wischbewegung eine Rotation des Spellrades in Gang gesetzt wird und durch ein erneutes Tippen auf den Touchscreen die Rotation unterbrochen wird. Ferner ist es vorgesehen, dass das Eingabeelement derart ausgestaltet ist, dass sich beim Auswählen des alphanumerischen Zeichens unterschiedliche Geschwindigkeiten für den Wechsel zwischen zwei benachbarten alphanumerischen Zeichen einstellen lassen, so dass zwischen den alphanumerischen Zeichen in einen Vorspulmodus gewechselt werden kann.

Vorzugsweise ist das Auswahlfeld zwischen verschiedenen Eingabefeldern überführbar. Beispielsweise wird bei einem Zeilensprung das Auswahlfeld automatisch an den Beginn des neuen Eingabefeldes angeordnet. Im Falle eines Touchscreens ist es auch vorstellbar, dass durch Berühren eines ausgewählten Eingabefeldes das Auswahlfeld an der entsprechenden Stelle von der Steuervorrichtung erstellt wird.

Ein weiterer Gegenstand der vorliegenden Erfindung ist ein Verfahren zur Eingabe einer Zeichenkette in ein Eingabefeld mittels eines erfindungsgemäßen Bediensystems, umfassend die Schritte: Verändern des alphanumerischen Zeichens im Vorschaubereich und Auswählen des alphanumerischen Zeichens, wobei das im Vorschaubereich ausgewählte alphanumerische Zeichen in das Eingabefeld eingetragen wird.

Ein weiterer Gegenstand der vorliegenden Erfindung ist ein Fahrzeug, insbesondere Nutzfahrzeug, mit einem erfindungsgemäßen Bediensystem.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Fig. 1a bis 1c: ein Bediensystem gemäß einer ersten beispielhaften Ausführungsform der vorliegenden Erfindung
- Fig. 2: eine Anzeigevorrichtung für ein Bediensystem gemäß einer zweiten beispielhaften Ausführungsform der vorliegenden Erfindung.

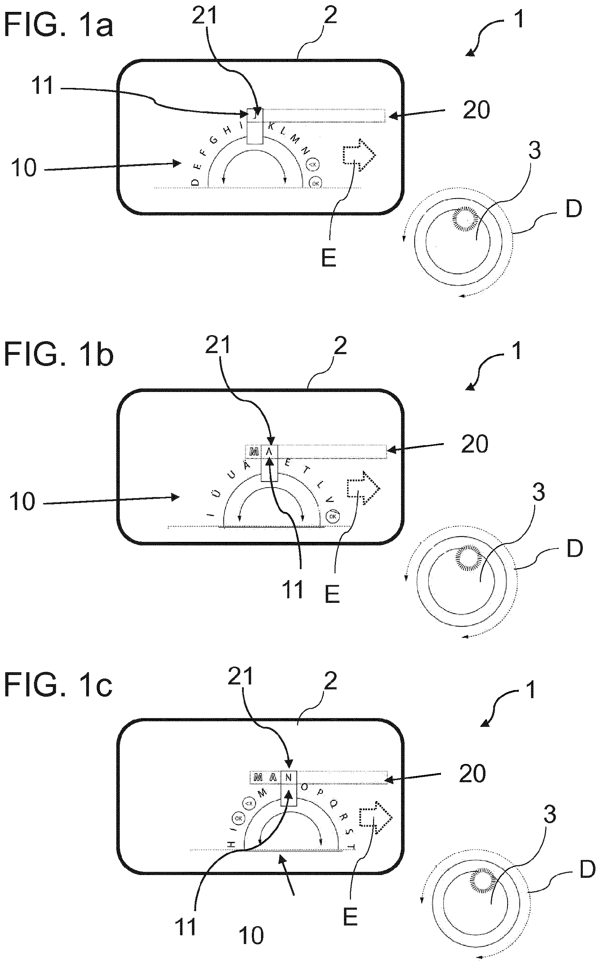

In den Figuren 1a bis 1c ist ein Bediensystem 1 gemäß einer ersten beispielhaften Ausführungsform der vorliegenden Erfindung dargestellt. Insbesondere handelt es sich um ein Bediensystem 1, das in ein Fahrzeug integriert ist und als Benutzerschnittstelle bzw. als Mensch-Maschinen-Schnittstelle dient. Beispielsweise ist das Bediensystem 1 Teil eines Infotainmentsystems. Hierzu umfasst das Bediensystem 1 ein Eingabeelement 3, eine Anzeigevorrichtung 2 und eine Steuervorrichtung (nicht dargestellt), wobei die Steuervorrichtung an das Eingabeelement und die Anzeigevorrichtung 3 gekoppelt ist. Insbesondere ist die Steuervorrichtung zur Steuerung einer Anzeige auf der Anzeigevorrichtung 2 mit einer Anzeigefläche vorgesehen, wobei die Steuervorrichtung derart ausgestaltet ist, dass sie die Anzeige veranlasst und vorzugsweise abhängig von einer Eingabe durch das Eingabeelement 3 die Anzeige modifiziert bzw. wechselt. Im konkreten Ausführungsbeispiel aus den Figuren 1a bis 1c ist das Bediensystem 1 zur Eingabe einer Zeichenkette vorgesehen. Bei einer solchen Zeichenkette kann es sich beispielsweise um einen Städtenamen für ein Navigationssystem oder ein Wort in einer Kurznachricht handeln. Die Zeichenkette muss hierbei in einem von der Steuervorrichtung auf der Anzeigefläche erzeugten Eingabefeld 20 eingetragen werden. Ferner ist es vorgesehen, dass die Steuervorrichtung ein Auswahlfeld 10 auf der Anzeigefläche generiert, wobei das Auswahlfeld 10 dem Nutzer eine Auswahl an alphanumerischen Zeichen zur Verfügung stellt, zwischen denen der Nutzer zur sukzessiven Bildung der Zeichenkette auswählen kann. Vorzugsweise ist das Auswahlfeld 10 als Spellrad bzw.-wheel ausgestaltet, bei dem die alphanumerischen Zeichen entlang eines halbkreisförmigen Verlaufs angeordnet sind. Dabei umfasst das Auswahlfeld 10 insbesondere einen Vorschaubereich 11, in dem ein einzelnes alphanumerisches Zeichen aus der Gruppe von durch das Auswahlfeld 10 bereitgestellten alphanumerischen Zeichen angeordnet ist. Insbesondere ist die Steuervorrichtung derart ausgestaltet, dass das alphanumerische Zeichen im Vorschaubereich 11 bei einer Bestätigung mittels des Eingabeelements 3 in das Eingabefeld 20 bzw. in einen Zielbereich 21 des Eingabefeldes 20 eingetragen wird. Vorzugsweise ist der Vorschaubereich 11 innerhalb des Auswahlfelds 10 ortsfest angeordnet. Beispielsweise ist der Vorschaubereich 11 stets im Scheitelpunkt des halbkreisförmigen Verlaufs des Auswahlfelds 10 dargestellt. Um zwischen den alphanumerischen Zeichen zu wechseln, lässt sich das Eingabeelement 3 nutzen. Zur möglichst intuitiven Nutzung ist das Eingabeelement 3 vorzugsweise als Dreh-Drückschalter ausgestaltet. Dadurch lässt sich mit einer Drehbewegung D zwischen den alphanumerischen Zeichen im Vorschaubereich 11 wechseln und durch eine Drückbetätigung dasjenige alphanumerische Zeichen, das aktuell im Vorschaubereich 11 dargestellt ist, zur Aufnahme in das Eingabefeld 20 bestätigen. Entsprechend der Drehbewegung D im Uhrzeigersinn oder gegen den Uhrzeigersinn ersetzt das jeweils benachbarte alphanumerische Zeichen dasjenige alphanumerische Zeichen, das zuvor im Vorschaubereich 11 angegeben wurde. Ferner ist es vorgesehen, dass sich bei der Drehbewegung D auch alle übrigen alphanumerischen Zeichen entsprechend neu ausrichten bzw. nachrücken, so dass auf einer Seite des Auswahlfeldes ein alphanumerisches Zeichen aus dem Auswahlfeld 10 heraustritt und auf der anderen Seite ein neues alphanumerisches Zeichen im Auswahlfeld in Erscheinung tritt. Mit anderen Worten: Entsprechend der Drehbewegung D im oder gegen den Uhrzeigersinn werden die alphanumerischen Zeichen entlang des halbkreisförmigen Verlaufs bewegt, wobei an den Enden des halbkreisförmigen Verlaufs alphanumerische Zeichen in das Auswahlfeld ein- oder austreten.

Die Steuervorrichtung ist derart ausgestaltet, dass das Auswahlfeld 10 auf der Anzeigevorrichtung 7 so dargestellt ist, dass der Vorschaubereich 11 überlappend bzw. unmittelbar angrenzend an den Zielbereich 21 des Eingabefelds 20 angeordnet ist. Dadurch werden dem Nutzer anstrengende Blickrichtungswechsel erspart und der Nutzer kann bei der Eingabe des alphanumerischen Zeichens einen Bildbereich auf der Anzeigevorrichtung 7 fixieren. In der in den Figuren 1a bis 1c dargestellten Ausführungsform ist es vorgesehen, dass der Vorschaubereich 11 deckungsgleich zum Zielbereichs 21 angeordnet ist, wobei vorzugsweise das Auswahlfeld 10 unterhalb des Eingabefelds 20 angeordnet ist. Durch die deckungsgleiche Anordnung des Vorschaubereichs 11 über dem Zielbereich 21 wird dem Nutzer bereits vor der Auswahl das alphanumerische Zeichen so angezeigt, wie es sich bei der Bestätigung durch das Eingabeelement 3 in das Eingabefeld 20 einfügen wird. Um zu vermeiden, dass die alphanumerischen Zeichen außerhalb des Vorschaubereichs 11 die freie Sicht auf das Eingabefeld 20 einschränken, ist es insbesondere vorgesehen, dass der Vorschaubereich 11 gegenüber den im Halbkreis angeordneten alphanumerischen Zeichen in radialer Richtung vorsteht. Ferner unterstützt ein Rahmen eine Verbindung zwischen dem Auswahlfeld 10 und dem Eingabefeld 20, um dem Nutzer die Orientierung zu erleichtern und dem Nutzer den Vorschaubereich 11 sowie den aktuellen Zielbereich 21 kenntlich zu machen. Ferner ist es vorgesehen, dass sich das alphanumerische Zeichen im Vorschaubereich 11 in seiner visuellen Darstellung von den alphanumerischen Zeichen außerhalb des Vorschaubereichs 11 unterscheidet. Beispielsweise ist das alphanumerische Zeichen im Vorschaubereich 11 größer als diejenigen außerhalb des Vorschaubereichs 11. Vorstellbar ist auch, dass sich das alphanumerische Zeichen im Vorschaubereich 11 im Hinblick auf seine Farbe oder seine Hintergrundfarbe von den alphanumerischen Zeichen außerhalb des Vorschaubereichs 11 unterscheidet.

Ferner ist es vorgesehen, dass die Steuervorrichtung derart ausgestaltet ist, dass sie das Auswahlfeld 10 bzw. das Eingabefeld 20 in einer parallel zur Eingaberichtung E vorgegebenen Richtung verschiebt, nachdem ein alphanumerisches Zeichen eingetragen wurde. Auf diese Weise lässt sich eine relative Ausrichtung zwischen dem aktuellen Zielbereich 21 und dem Vorschaubereich 11 während des sukzessiven Zusammensetzens der Zeichenkette konstant halten. In den Figuren 1a bis 1c ist das Eintragen von drei verschiedenen Zeichen dargestellt und das Auswahlfeld 10 wechselt hierzu zwischen den einzelnen eingetragenen alphanumerischen Zeichen seine Position und bewegt sich dazu in Eingaberichtung E. Ferner ist es vorstellbar, dass die Auswahl der von dem Auswahlfeld 10 bereitgestellten alphanumerischen Zeichen abhängt von den bereits in das Eingabefels 20 eingetragenen alphanumerischen Zeichen. Hierzu gleicht die Steuervorrichtung die bisher eingetragenen alphanumerischen Zeichen in ihrer eingetragenen Reihenfolge mit einer abgespeicherten Liste an möglichen Zeichenketten ab und stellt diejenigen alphanumerischen Zeichen bereit, die zur Bildung einer in der Liste abgespeicherten Zeichenkette noch in Frage kommen. Durch die reduzierte Auswahl lässt sich die Bildung der Zeichenkette vorteilhaft beschleunigen. Neben den alphanumerischen Zeichen stellt das Auswahlfeld 10 vorzugsweise weitere Zeichen bereit, bei deren Auswahl im Vorschaubereich 11 beispielsweise ein Löschvorgang des zuletzt eingetragenen Zeichens erfolgt, ein Leerzeichen in das Eingabefeld 20 eingetragen oder ein Eingabeende bestätigt wird. Alternativ ist es auch vorstellbar, dass ein Löschvorgang durch eine festgelegte Betätigungsart des Eingabeelements, beispielsweise mit einem vergleichsweise langen Drücken, veranlasst wird. Im Anschluss an das Eingabeende wird die eingetragene Zeichenkette von der Steuervorrichtung einer Fahrzeugfunktionalität, z. B. einem Navigationssystem oder einem Kommunikationssystem, bereitgestellt.

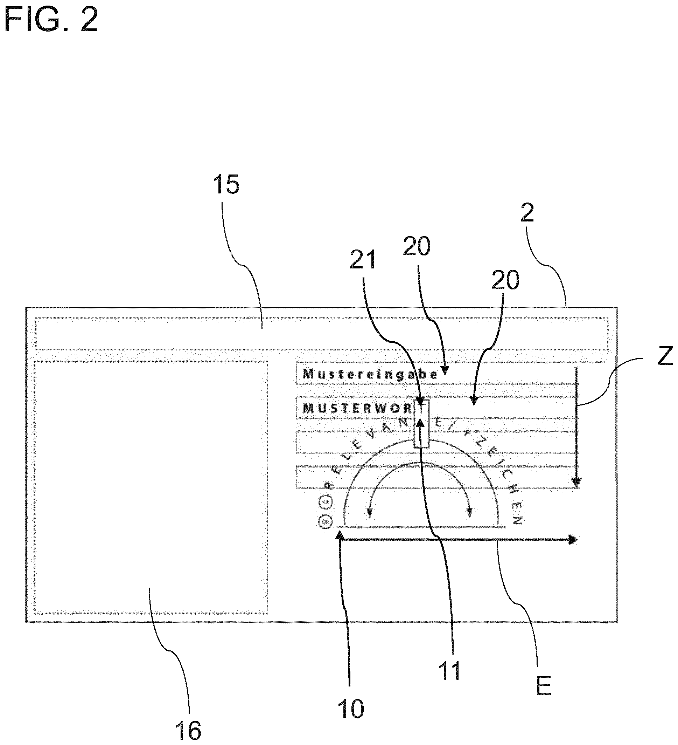

In der Figur 2 ist eine Anzeigevorrichtung 7 für ein Bediensystem 1 gemäß einer zweiten beispielhaften Ausführungsform der vorliegenden Erfindung dargestellt. Im Wesentlichen entspricht das Bediensystem 1 demjenigen aus der Figur 1 und unterscheidet sich nur dadurch, dass mehrere Eingabefelder 20 auf der rechten Seite der Anzeigevorrichtung 7 zur Anzeige gebracht sind, neben einer Hauptanzeige 16, die z. B. zur Anzeige einer Navigationskarte dient. Um die unterschiedlichen Eingabefelder 20 mit Zeichenketten zu füllen, ist die Steuervorrichtung derart ausgestaltet, dass das Auswahlfeld 10 auf der Anzeige zwischen den Eingabefeldern 20 wechseln kann. D. h. das Auswahlfeld 10 als solches lässt sich nicht nur in Eingaberichtung E verschieben, sondern lässt sich auch entlang einer senkrecht zur Eingaberichtung E verlaufenden Richtung versetzen. Beispielsweise lässt sich das Auswahlfeld für einen Zeilensprung Z neu ausrichten. Weiterhin ist es in der Ausführungsform in Figur 2 vorgesehen, dass die Steuervorrichtung neben den Eingabefeldern weitere Felder, wie z. B. eine Menüleiste 15 oder eine Hauptanzeige 15, beispielsweise zur Darstellung einer Karte, erzeugt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Bediensystem
- 2: Anzeigevorrichtung
- 3: Eingabeelement
- 10: Auswahlfeld
- 11: Vorschaubereich
- 15: Menüleiste
- 16: Hauptanzeige
- 20: Eingabefeld
- 21: Zielbereich
- D: Drehbewegung
- E: Eingaberichtung
- Z: Zeilensprung

## Patentansprüche

1. Bediensystem (1) zur Eingabe einer Zeichenkette in einem Fahrzeug, wobei das Bediensystem (1) eine Anzeigevorrichtung (2) mit einer Anzeigefläche, ein Eingabeelement (3) und eine Steuervorrichtung, die an die Anzeigevorrichtung (2) und das Eingabeelement (3) angekoppelt ist und mit der eine wiedergebende Anzeige auf der Anzeigefläche steuerbar ist, umfasst, wobei die Anzeigefläche durch die Steuervorrichtung (6) derart ansteuerbar ist, dass auf der Anzeigefläche
- ein Eingabefeld (20) mit einem zur Eingabe eines alphanumerischen Zeichens vorgesehenen Zielbereich (21) und
- ein Auswahlfeld (10) mit einem Vorschaubereich (11), in dem ein einzelnes alphanumerisches Zeichen aus einer Gruppe durch das Auswahlfeld (10) bereitgestellter alphanumerischer Zeichen angeordnet ist,
anzeigt wird,
wobei das Bediensystem (11) derart ausgestaltet ist, dass durch eine Betätigung des Eingabeelements (3) das alphanumerische Zeichen im Vorschaubereich (11) änderbar und/
oder zum Einfügen in den Zielbereich (21) auswählbar ist,
wobei der Vorschaubereich (11) und der Zielbereich (21) überlappend angeordnet sind, **dadurch gekennzeichnet, dass** im Auswahlfeld (10) die alphanumerischen Zeichen außerhalb des Vorschaubereichs (11) entlang eines Bogens angeordnet sind und das alphanumerische Zeichen im Vorschaubereich (11) gegenüber dem Bogen in Richtung des Zielbereichs versetzt angeordnet ist und keines der alphanumerischen Zeichen außerhalb des Vorschaubereichs das gleiche alphanumerische Zeichen ist wie das alphanumerische Zeichen im Vorschaubereich.

2. Bediensystem (1) gemäß Anspruch 1, wobei im Auswahlfeld (10) mehrere alphanumerische Zeichen entlang eines Halbkreises, eines offenen Kreises oder eines geschlossenen Kreises angeordnet sind.

3. Bediensystem (1) gemäß einem der vorhergehenden Ansprüche, wobei der Vorschaubereich (11) in Bezug auf das Auswahlfeld (10) ortsfest ist.

4. Bediensystem (1) gemäß einem der vorhergehenden Ansprüche, wobei das alphanumerische Zeichen im Vorschaubereich (11) deckungsgleich zu seiner Zielausrichtung im Eingabefeld (20) angeordnet ist.

5. Bediensystem (1) gemäß einem der vorhergehenden Ansprüche, wobei das Bediensystem (1) derart ausgestaltet ist, dass sich nach dem Einfügen eines alphanumerischen Zeichens das Eingabefeld (20) und/oder das Auswahlfeld (10) zur erneuten gegenseitigen Ausrichtung von Zielbereich (21) und Vorschaubereich (11) parallel zu einer durch das Eingabefeld (20) vorgegebenen Eingaberichtung (E) verschiebt, wobei sich insbesondere das Eingabefeld (20) oder das Auswahlfeld (10) abhängig vom aktuellen Zielbereich (21) parallel zur Eingaberichtung (E) verschiebt.

6. Bediensystem (1) gemäß einem der vorhergehenden Ansprüche, wobei sich das alphanumerische Zeichen im Vorschaubereich (11) von den alphanumerischen Zeichen im Auswahlfeld außerhalb des Vorschaubereichs (11) in seiner visuellen Darstellung unterscheidet.

7. Bediensystem (1) gemäß Anspruch 6, wobei das alphanumerische Zeichen im Vorschaubereich (11) im Vergleich zu den alphanumerischen Zeichen außerhalb des Vorschaubereichs (11) vergrößert ist, eine andere Farbe aufweist und/oder mit einer anderen Hintergrundfarbe oder einem anderen Hintergrundmuster hinterlegt ist.

8. Bediensystem (1) gemäß einem der vorhergehenden Ansprüche, wobei der Zielbereich (21) und der Vorschaubereich (11) über ein gemeinsames graphisches Element, beispielsweise ein Rahmenelement, miteinander verbunden sind.

9. Bediensystem (1) gemäß einem der vorhergehenden Ansprüche, wobei das Bediensystem (1) derart konfiguriert ist, dass eine vom Auswahlfeld (10) bereitgestellte Auswahl an alphanumerischen Zeichen abhängt von den bereits in das Eingabefeld (20) eingetragenen alphanumerischen Zeichen.

10. Bediensystem (1) gemäß einem der vorhergehenden Ansprüche, wobei die Anzeigevorrichtung (2) ein Vorschlagsfeld aufweist, in dem abhängig von den bereits in das Eingabefeld (20) eingetragenen alphanumerischen Zeichen Vorschläge für die Zeichenkette eingetragen sind.

11. Bediensystem (1) gemäß einem der vorhergehenden Ansprüche, wobei das Eingabeelement (3) einen Dreh-Drücksteller, einen Touchscreen und/oder ein Spracherkennungssystem umfasst.

12. Bediensystem (1) gemäß einem der vorhergehenden Ansprüche, wobei das Auswahlfeld (10) zwischen verschiedenen Eingabefeldern (20) überführbar ist.

13. Verfahren zur Eingabe einer Zeichenkette in ein Eingabefeld (10) mittels eines Bediensystems (1) gemäß einem der vorhergehenden Ansprüche, umfassend die Schritte Verändern des alphanumerischen Zeichens im Vorschaubereich (11) und
Auswählen des alphanumerischen Zeichens,
wobei das im Vorschaubereich (11) ausgewählte alphanumerische Zeichen in das Eingabefeld (20) eingetragen wird.

14. Fahrzeug, insbesondere Nutzfahrzeug, mit einem Bediensystem (1) gemäß einem der Ansprüche 1 bis 12.

## Claims

1. An operator control system (1) for inputting a chain of characters in a vehicle, wherein the operator control system (1) comprises a display device (2) with a display area, an input element (3) and a control device which is coupled to the display device (2) and the input element (3) and with which a representing display on the display area can be controlled, wherein the display area can be actuated by the control device (6) in such a way that displayed on the display area are:
- an input field (20) with a target area (21) which is provided for inputting an alphanumeric character and
- a selection field (10) with a preview area (11) in which a single alphanumeric character from a group of alphanumeric characters provided by the selection field (10) is arranged,
wherein the operator control system (11) is configured in such a way that the alphanumeric character in the preview area (11) can be changed by activating the input element (3) and/or can be selected for insertion into the target area (21),
wherein the preview area (11) and the target area (21) are arranged overlapping one another, **characterized in that** the alphanumeric characters outside the preview area (11) are arranged along an arc in the selection field (10), and the alphanumeric character in the preview area (11) is arranged offset with respect to the arc in the direction of the target area and none of the alphanumeric characters outside the preview area is the same alphanumeric character as the alphanumeric character in the preview area.

2. The operator control system (1) according to Claim 1, wherein in the selection field (10) a plurality of alphanumeric characters are arranged along a semicircle, an open circle or a closed circle.

3. The operator control system (1) according to one of the preceding claims, wherein the preview area (11) is arranged in a positionally fixed fashion with respect to the selection field (10).

4. The operator control system (1) according to one of the preceding claims, wherein the alphanumeric character in the preview area (11) is arranged congruently with respect to its target orientation in the input field (20) .

5. The operator control system (1) according to one of the preceding claims, wherein the operator control system (1) is configured in such a way that after the insertion of an alphanumeric character, the input field (20) and/or the selection field (10) shifts parallel to an input direction (E) specified by the input field (20) to bring about renewed mutual orientation of the target area (21) and preview area (11), wherein in particular the input field (20) or the selection field (10) shifts parallel to the input direction (E) in accordance with the current target area (21).

6. The operator control system (1) according to one of the preceding claims, wherein the alphanumeric character in the preview area (11) differs from the alphanumeric characters in the selection field outside the preview area (11) in its visual representation.

7. The operator control system (1) according to Claim 6, wherein the alphanumeric character in the preview area (11) is enlarged in comparison with alphanumeric characters outside the preview area (11), is in a different colour and/or is stored with a different background colour or a different background pattern.

8. The operator control system (1) according to one of the preceding claims, wherein the target area (21) and the preview area (11) are connected to one another via a common graphic element, for example a frame element.

9. The operator control system (1) according to one of the preceding claims, wherein the operator control system (1) is configured in such a way that a selection of alphanumeric characters which is provided by the selection field (10) depends on the alphanumeric characters which are already input into the input field (20) .

10. The operator control system (1) according to one of the preceding claims, wherein the display device (2) has a suggestion field in which suggestions for the chain of characters are input in accordance with the alphanumeric characters which have already been input into the input field (20).

11. The operator control system (1) according to one of the preceding claims, wherein the input element (3) comprises a turn and press actuator, a touchscreen and/or a voice recognition system.

12. The operator control system (1) according to one of the preceding claims, wherein the selection field (10) can be transferred between different input fields (20).

13. A method for inputting a chain of characters into an input field (10) by means of an operator control system (1) according to one of the preceding claims, comprising the steps of:
changing the alphanumeric character in the preview area (11) and
selecting the alphanumeric character,
wherein the alphanumeric character which is selected in the preview area (11) is input into the input field (20) .

14. A vehicle, in particular utility vehicle, having an operator control system (1) according to one of Claims 1 to 12.

## Revendications

1. Système d'utilisation (1) permettant de saisir une chaîne de caractères dans un véhicule, le système d'utilisation (1) comprenant un dispositif d'affichage (2) doté d'une surface d'affichage, un élément de saisie (3) et un dispositif de commande qui est couplé au dispositif d'affichage (2) et à l'élément de saisie (3) et qui permet de commander un affichage de reproduction sur la surface d'affichage, la surface d'affichage pouvant être pilotée par le dispositif de commande (6) de telle sorte que sur la surface d'affichage sont affichés
- un champ de saisie (20) doté d'une zone cible (21) prévue pour la saisie d'un caractère alphanumérique, et
- un champ de sélection (10) doté d'une zone de prévisualisation (11) dans laquelle est disposé un seul caractère alphanumérique provenant d'un groupe de caractères alphanumériques fourni par le champ de sélection (10),
le système d'utilisation (11) étant configuré de telle sorte qu'un actionnement de l'élément de saisie (3) permet de modifier le caractère alphanumérique dans la zone de prévisualisation (11) et/ou de le sélectionner pour l'insérer dans la zone cible (21),
la zone de prévisualisation (11) et la zone cible (21) étant disposées de façon à se chevaucher,
**caractérisé en ce que** dans le champ de sélection (10), les caractères alphanumériques en dehors de la zone de prévisualisation (11) sont disposés le long d'un arc, et des caractères alphanumériques dans la zone de prévisualisation (11) sont disposés par rapport à l'arc de manière décalée en direction de la zone cible, et aucun des caractères alphanumériques en dehors de la zone de prévisualisation n'est le même caractère alphanumérique que le caractère alphanumérique dans la zone de prévisualisation.

2. Système d'utilisation (1) selon la revendication 1, dans lequel plusieurs caractères alphanumériques sont disposés le long d'un demi-cercle, d'un cercle ouvert ou d'un cercle fermé dans le champ de sélection (10) .

3. Système d'utilisation (1) selon l'une quelconque des revendications précédentes, dans lequel la zone de prévisualisation (11) est stationnaire par rapport au champ de sélection (10).

4. Système d'utilisation (1) selon l'une quelconque des revendications précédentes, dans lequel le caractère alphanumérique est disposé dans la zone de prévisualisation (11) de manière coïncidente avec son alignement cible dans le champ de saisie (20).

5. Système d'utilisation (1) selon l'une quelconque des revendications précédentes, le système d'utilisation (1) étant configuré de telle sorte qu'après l'insertion d'un caractère alphanumérique, le champ de saisie (20) et/ou le champ de sélection (10) se décale(nt) pour un nouvel alignement mutuel de la zone cible (21) et de la zone de prévisualisation (11) en parallèle à une direction de saisie (E) prédéfinie par le champ de saisie (20), le champ de saisie (20) ou le champ de sélection (10) se décalant en particulier en fonction de la zone cible actuelle (21) en parallèle à la direction de saisie (E).

6. Système d'utilisation (1) selon l'une quelconque des revendications précédentes, dans lequel le caractère alphanumérique dans la zone de prévisualisation (11) se distingue par sa représentation visuelle du caractère alphanumérique dans le champ de sélection en dehors de la zone de prévisualisation (11).

7. Système d'utilisation (1) selon la revendication 6, dans lequel le caractère alphanumérique dans la zone de prévisualisation (11) est agrandi en comparaison avec les caractères alphanumériques en dehors de la zone de prévisualisation (11), présente une couleur différente et/ou est affiché avec une couleur d'arrière-plan différente ou avec un motif d'arrière-plan différent.

8. Système d'utilisation (1) selon l'une quelconque des revendications précédentes, dans lequel la zone cible (21) et la zone de prévisualisation (11) sont reliées l'une à l'autre par un élément graphique commun, par exemple par un élément de bordure.

9. Système d'utilisation (1) selon l'une quelconque des revendications précédentes, le système d'utilisation (1) étant configuré de telle sorte qu'une sélection de caractères alphanumériques fournie par le champ de sélection (10) dépend des caractères alphanumériques déjà entrés dans le champ de saisie (20) .

10. Système d'utilisation (1) selon l'une quelconque des revendications précédentes, dans lequel le dispositif d'affichage (2) présente un champ de proposition dans lequel des propositions pour la chaîne de caractères sont entrées en fonction des caractères alphanumériques déjà entrés dans le champ de saisie (20) .

11. Système d'utilisation (1) selon l'une quelconque des revendications précédentes, dans lequel l'élément de saisie (3) comprend un bouton-poussoir rotatif, un écran tactile et/ou un système de reconnaissance vocale.

12. Système d'utilisation (1) selon l'une quelconque des revendications précédentes, dans lequel le champ de sélection (10) peut être transféré entre différents champs de saisie (20).

13. Procédé permettant de saisir une chaîne de caractères dans un champ de saisie (10) au moyen d'un système d'utilisation (1) selon l'une quelconque des revendications précédentes, comprenant les étapes consistant à
modifier le caractère alphanumérique dans la zone de prévisualisation (11), et
sélectionner le caractère alphanumérique,
le caractère alphanumérique sélectionné dans la zone de prévisualisation (11) étant entré dans le champ de saisie (20).

14. Véhicule, en particulier véhicule utilitaire, comprenant un système d'utilisation (1) selon l'une quelconque des revendications 1 à 12.
